# EUROPÄISCHE PATENTSCHRIFT

(11) **EP 3 064 752 B1**
(45) Veröffentlichungstag und Bekanntmachung des Hinweises auf die Patenterteilung: **12.09.2018**
(21) Anmeldenummer: 16158446.1
(22) Anmeldetag: 03.03.2016
(51) Int. Cl.: F02D 41/40, F02D 35/02, F02D 41/24

(54) **VERFAHREN UND STEUERVORRICHTUNG ZUM ERMITTELN EINES WIRKGRÖSSEN-VERLAUFS**
METHOD AND CONTROL DEVICE FOR DETERMINING THE CHANGE IN AN OUTPUT VARIABLE
PROCÉDÉ ET DISPOSITIF DE COMMANDE POUR DÉTERMINER L'ÉVOLUTION D'UNE VARIABLE DE SORTIE

(30) Priorität: 05.03.2015 DE 102015203940
(43) Veröffentlichungstag der Anmeldung: 07.09.2016
(73) Patentinhaber: Volkswagen Aktiengesellschaft, 38440 Wolfsburg (DE)
(72) Erfinder: Jeschke, Jens, 38106 Braunschweig (DE); Piewek, Jan, 39128 Magdeburg (DE)
(74) Vertreter: MFG Patentanwälte Meyer-Wildhagen Meggle-Freund Gerhard PartG mbB

(56) Entgegenhaltungen:
- EP-A1- 1 936 156
- WO-A1-2013/183163
- DE-A1- 19 963 358
- DE-A1-102004 001 119
- DE-A1-102007 034 340
- DE-A1-102011 008 210
- US-A1- 2012 303 242

## Beschreibung

Die Erfindung betrifft ein Verfahren und eine Steuervorrichtung zum Ermitteln eines Wirkgrößen-Verlaufs einer physikalischen Wirkgröße eines ersten Wirkmechanismus einer motorischen Wirkkette einer Verbrennungskraftmaschine.

Heutzutage müssen Verbrennungskraftmaschinen immer höhere Anforderungen bezüglich ihrer Betriebseigenschaften, wie beispielsweise ihrer Effizienz, ihrer Geräuschentwicklung und ihrer Abgasemissionen, erfüllen. Daher müssen die Verbrennungskraftmaschinen derart betrieben werden, dass ihr Brennverlauf im Wesentlichen einem vorgegebenen, optimalen Soll-Brennverlauf entspricht. Dazu bedarf es einer aufwendigen Bestimmung von Parametern, die den Brennverlauf der Verbrennungskraftmaschinen beeinflussen, insbesondere von Einspritzparametern. Im Falle von Diesel-Verbrennungskraftmaschinen mit einem Commonrail-System ist auch eine geeignete Bestimmung eines Raildrucks sehr wichtig.

Es besteht daher der Bedarf, die Einspritzparameter und gegebenenfalls den Raildruck mit geringem Aufwand so anzupassen, dass ein auf diesen Einspritzparametern und gegebenenfalls diesem Raildruck basierender Brennverlauf annähernd mit einem optimalen Soll-Brennverlauf übereinstimmt.

Die DE 10 2012 018 617 B3 beschreibt ein Verfahren zum Beeinflussen eines Betriebszustands eines Verbrennungsmotors. Es wird mit Hilfe einiger Stützpunkte, die beispielsweise auf Einspritzparametern basieren, ein Ersatzeinspritzverlauf bestimmt und auf diesem basierend ein Ersatzbrennverlauf bestimmt. Durch eine Änderung der den Stützpunkten zugrunde liegenden Einspritzparameter ändert sich der Ersatzbrennverlauf, so dass durch Bewerten der Ersatzbrennverläufe zu unterschiedlichen Einspritzparametern gut geeignete Einspritzparameter bestimmt werden können.

Allerdings sind der Ersatzeinspritzverlauf und der Ersatzbrennverlauf sehr grob abgeschätzt. Insbesondere wird eine Verzögerung der Verbrennung einzelner Kraftstoffpakete nicht berücksichtigt. Die einzustellenden Einspritzparameter können daher nur mit einer sehr eingeschränkten Genauigkeit bestimmt werden.

Ein anderer Ansatz liegt darin, den Brennraum räumlich in verschiedene Zonen einzuteilen, für jede Zone einen Brennverlauf zu modellieren und aus den Brennverläufen der einzelnen Zonen einen gesamten Brennverlauf zu formen. Dieses Verfahren wird beispielsweise in dem Artikel "A Zero-Dimensional Phenomenological Model for RCCI Combustion Using Reaction Kinetics" (Eichmeier, J., Reitz, R., und Rutland, C., SAE Int. J. Engines 7(1):106-119, 2014, doi:10.4271/2014-01-1074.) und in "Grundlagen Verbrennungsmotoren" (Merker et al., Vieweg+Teubner (2009), 11. Kapitel) beschrieben. Allerdings ist die Bestimmung der Brennverläufe in den einzelnen Zonen aufwendig und rechenintensiv.

Die DE 10 2004 001 119 A1 beschreibt ein Verfahren zum Bestimmen von Teileinspritzmengen, wobei ausgehend von einem Druckverlauf im Brennraum eines Zylinders ein Summenheizverlauf bzw. ein Summenbrennverlauf bestimmt. Aus dem Summenheizverlauf bzw. dem Summenbrennverlauf werden dann Teileinspritzmengen bestimmt.

Die DE 10 2011 008 210 A1 offenbart ein Verfahren zum Einstellen von Kraftstoffeinspritzmengen, wobei aus einem Zylinderinnendruck ein Heizverlauf bestimmt und dieser anschließend in Teilheizverläufe eingeteilt wird, die einzelnen Teileinspritzungen zugeordnet sind.

Die EP 1 936 156 A1 beschreibt ein Verfahren zum Steuern eines Motors, wobei ebenfalls eine Kurve eines Heizverlaufs in verschiedene Intervalle aufgeteilt wird, wobei jedes Intervall einer Teileinspritzung zugeordnet ist. Die Intervalle werden zur Optimierung der Einspritzung eingesetzt.

Die US 2012/0303242 A1 beschreibt ein Verfahren zum Steuern einer Brennkraftmaschine, wobei Ausgangsgrößen eines ersten Teilmodells als Eingangsgrößen eines zweiten Teilmodells berücksichtigt werden.

Aufgabe der vorliegenden Erfindung ist es, ein Verfahren und eine Steuervorrichtung zum Ermitteln eines Wirkgrößen-Verlaufs einer physikalischen Wirkgröße eines ersten Wirkmechanismus einer motorischen Wirkkette einer Verbrennungskraftmaschine bereitzustellen, die die oben genannten Nachteile wenigstens teilweise überwinden.

Diese Aufgabe wird durch das erfindungsgemäße Verfahren zum Ermitteln eines Wirkgrößen-Verlaufs nach Anspruch 1 und die erfindungsgemäße Steuervorrichtung zum Ermitteln eines Wirkgrößen-Verlaufs nach Anspruch 8 gelöst.

Gemäß einem ersten Aspekt betrifft die vorliegende Erfindung ein Verfahren zum Ermitteln eines Wirkgrößen-Verlaufs einer physikalischen Wirkgröße eines ersten Wirkmechanismus einer motorischen Wirkkette einer Verbrennungskraftmaschine, umfassend:
Erhalten eines Eingangsgrößen-Verlaufs einer physikalischen Eingangsgröße des ersten Wirkmechanismus oder eines diesem vorangehenden zweiten Wirkmechanismus der motorischen Wirkkette der Verbrennungskraftmaschine;
Bestimmen von für je einen Eingangsgrößen-Teilverlauf charakteristischen Größen auf Grundlage des Eingangsgrößen-Verlaufs;
Ermitteln jeweils eines Wirkgrößen-Teilverlaufs zu jeder der für je einen der Eingangsgrößen-Teilverläufe charakteristischen Größen mit Hilfe einer Ermittlungsvorschrift; und
Bestimmen des Wirkgrößen-Verlaufs des ersten Wirkmechanismus auf Grundlage der ermittelten Wirkgrößen-Teilverläufe.

Gemäß einem weiteren Aspekt betrifft die vorliegende Erfindung eine Steuervorrichtung zum Ermitteln eines Wirkgrößen-Verlaufs einer physikalischen Wirkgröße eines ersten Wirkmechanismus einer motorischen Wirkkette einer Verbrennungskraftmaschine, die dazu ausgebildet ist, ein Verfahren nach dem vorherigen Aspekt durchzuführen.

Weitere vorteilhafte Ausgestaltungen der Erfindung ergeben sich aus den Unteransprüchen und der folgenden Beschreibung bevorzugter Ausführungsbeispiele der vorliegenden Erfindung.

Gemäß dem erfindungsgemäßen Verfahren zum Ermitteln eines Wirkgrößen-Verlaufs einer physikalischen Wirkgröße eines ersten Wirkmechanismus einer motorischen Wirkkette einer Verbrennungskraftmaschine wird ein Eingangsgrößen-Verlauf einer physikalischen Eingangsgröße des ersten Wirkmechanismus oder eines diesem vorangehenden zweiten Wirkmechanismus der motorischen Wirkkette der Verbrennungskraftmaschine erhalten. Auf Grundlage des erhaltenen Eingangsgrößen-Verlaufs werden für je einen Eingangsgrößen-Teilverlauf des Eingangsgrößen-Verlaufs charakteristische Größen bestimmt und zu jeder der für einen der Eingangsgrößen-Teilverläufe charakteristischen Größen wird mit Hilfe einer Ermittlungsvorschrift jeweils ein Wirkgrößen-Teilverlauf ermittelt. Auf Grundlage der ermittelten Wirkgrößen-Teilverläufe wird dann der Wirkgrößen-Verlauf des ersten Wirkmechanismus bestimmt.

Durch das erfindungsgemäße Verfahren wird ohne großen rechnerischen Aufwand ein realistischer Wirkgrößen-Verlauf bereitgestellt, wobei insbesondere eine verspätete Verbrennung einzelner Kraftstofftropfen bzw. einzelner Kraftstoffpakete berücksichtigt wird.

Die motorische Wirkkette (auch innermotorische Wirkkette genannt) der Verbrennungskraftmaschine beschreibt einen Ablauf der motorischen Verbrennung der Verbrennungskraftmaschine, beispielsweise von einer Ansteuerung eines Einspritzsystems bis zu einem Energietransport. Dieser Ablauf enthält eine Folge von Teilschritten bzw. Wirkmechanismen, beispielsweise ein Öffnen einer Düsennadel eines Injektors des Einspritzsystems (Nadelhub), eine Einspritzung eines Kraftstoffs in einen Brennraum oder ein Saugrohr der Verbrennungskraftmaschine, eine Aufbereitung des eingespritzten Kraftstoffs, eine Energieumsetzung bzw. Verbrennung des aufbereiteten Kraftstoffs und einen Energietransport. Unter einem Wirkmechanismus kann ein Zusammenhang bzw. Modell zwischen einer Eingangsgröße bzw. einem Eingangsgrößen-Verlauf und der durch die Eingangsgröße beeinflussten Wirkgröße bzw. dem entsprechenden Wirkgrößen-Verlauf verstanden werden. Während des Betriebs der Verbrennungskraftmaschine innerhalb eines Arbeitstaktes können sich sowohl Eingangsgrößen als auch Wirkgrößen ändern. Der innerhalb einer Verbrennung entstehende Verlauf kann den zeitlichen Ablauf der Wirkungen innerhalb eines Arbeitstakts darstellen. Üblicherweise enthält die Wirkkette in der folgenden Reihenfolge die Wirkmechanismen Nadelhub, Einspritzung, Aufbereitung, Energieumsetzung und Energietransport. Es können jedoch einzelne Wirkmechanismen wegfallen, mehrere aufeinanderfolgende Wirkmechanismen zusammengefasst oder zusätzliche Wirkmechanismen, beispielsweise eine Zündung des Kraftstoffs oder eine Emissionsbildung, ergänzt werden.

Jeder der genannten Wirkmechanismen enthält eine oder mehrere Eingangsgrößen und eine physikalische Wirkgröße. Beispielsweise ist die Eingangsgröße des Nadelhubs der Strom und/oder die Spannung zum Bewegen der Düsennadel des Injektors und die Wirkgröße des Nadelhubs der Öffnungsgrad (Nadelhub) der Düsennadel des Injektors. Die Eingangsgröße der Einspritzung kann der Öffnungsgrad des Injektors sein und die Wirkgröße der Einspritzung die Menge an eingespritztem Kraftstoff. Die Eingangsgröße der Aufbereitung des eingespritzten Kraftstoffs kann die Menge an eingespritztem Kraftstoff sein und die Wirkgröße der Aufbereitung des eingespritzten Kraftstoffs eine Eigenschaft, beispielsweise die Menge, eines zündfähigen Gemischs des eingespritzten Kraftstoffs. Die Eingangsgröße der Energieumsetzung kann die Eigenschaft, beispielsweise die Menge, des zündfähigen Gemischs sein und die Wirkgröße der Energieumsetzung eine im Brennraum umgesetzte Energiemenge aus dem verbrannten Kraftstoff. Die Eingangsgröße des Energietransports kann die umgesetzte Energie sein und die Wirkgröße des Energietransports eine im Arbeitsgas beobachtbare Energie.

Die Eingangsgröße des ersten Wirkmechanismus kann beispielsweise die Wirkgröße des zweiten, dem ersten vorangehenden Wirkmechanismus sein.

Der Eingangsgrößen-Verlauf des ersten oder des zweiten Wirkmechanismus kann ein Ansteuerverlauf, ein Nadelhubverlauf, ein Einspritzverlauf, ein Gemischbildungsverlauf oder ein Brennverlauf sein. Der Wirkgrößen-Verlauf kann ein Nadelhubverlauf, ein Einspritzverlauf, ein Gemischbildungsverlauf, ein Brennverlauf oder ein Heizverlauf sein. Anstelle des Heizverlaufs kann der Wirkgrößen-Verlauf ein Druckverlauf oder ein Temperaturverlauf des Arbeitsgases sein. Eine Auswertung der Verläufe zur Bildung von Kennwerten wie Wärmemenge, Verbrennungslage und indiziertem Moment ist ebenfalls einfach möglich.

Zum Beispiel kann der Eingangsgrößen-Verlauf ein Ansteuerverlauf sein. Wenn der Eingangsgrößen-Verlauf ein Ansteuerverlauf ist, kann der Wirkgrößen-Verlauf ein Nadelhubverlauf, ein Einspritzverlauf, ein Gemischbildungsverlauf, ein Brennverlauf oder ein Heizverlauf sein. Der Eingangsgrößen-Verlauf kann alternativ ein Nadelhubverlauf sein. Wenn der Eingangsgrößen-Verlauf ein Nadelhubverlauf ist, kann der Wirkgrößen-Verlauf ein Einspritzverlauf, ein Gemischbildungsverlauf, ein Brennverlauf oder ein Heizverlauf sein. Alternativ kann der Eingangsgrößen-Verlauf ein Einspritzverlauf sein. Wenn der Eingangsgrößen-Verlauf ein Einspritzverlauf ist, kann der Wirkgrößen-Verlauf ein Gemischbildungsverlauf, ein Brennverlauf oder ein Heizverlauf sein. Alternativ kann der Eingangsgrößen-Verlauf ein Gemischbildungsverlauf sein. Wenn der Eingangsgrößen-Verlauf ein Gemischbildungsverlauf ist, kann der Wirkgrößen-Verlauf ein Brennverlauf oder ein Heizverlauf sein. Weiter alternativ kann der Eingangsgrößen-Verlauf ein Brennverlauf sein. Wenn der Eingangsgrößen-Verlauf ein Brennverlauf ist, kann der Wirkgrößen-Verlauf ein Heizverlauf sein.

Der Eingangsgrößen-Verlauf kann ein Eingangsgrößen-Verlauf während eines Zyklus der motorischen Verbrennung der Verbrennungskraftmaschine sein. Entsprechend kann der Wirkgrößen-Verlauf ein Wirkgrößen-Verlauf während eines Zyklus der motorischen Verbrennung der Verbrennungskraftmaschine sein. Ein Zyklus der motorischen Verbrennung der Verbrennungskraftmaschine kann eine Zeitspanne sein, die die Phasen Ansaugen, Verdichten, Expandieren und Ausschieben der Verbrennungskraftmaschine enthält und einen vollständigen Einspritz- und Verbrennungszyklus enthält.

Zum Beispiel kann zum Ermitteln eines Brennverlaufs als Wirkgrößen-Verlauf einer physikalischen Wirkgröße der Energieumsetzung als erstem Wirkmechanismus ein Einspritzverlauf als Eingangsgrößen-Verlauf einer physikalischen Eingangsgröße der der Energieumsetzung vorangehenden Aufbereitung des eingespritzten Kraftstoffs als zweitem Wirkmechanismus erhalten werden. Auf Grundlage des erhaltenen Einspritzverlaufs können für je einen Einspritz-Teilverlauf des Einspritzverlaufs charakteristische Größen bestimmt werden. Zu jeder der für je einen der Einspritz-Teilverläufe charakteristischen Größen kann mit Hilfe einer Ermittlungsvorschrift jeweils ein Teilbrennverlauf ermittelt werden. Auf Grundlage der ermittelten Teilbrennverläufe kann dann der Brennverlauf bestimmt werden. Alternativ oder zusätzlich ist eine Auswertung jedes Teilverlaufs zur Bildung von Kennwerten wie Wärmemenge, Verbrennungslage und indiziertem Moment einfach möglich.

Das Erhalten des Eingangsgrößen-Verlaufs des ersten Wirkmechanismus enthält beispielsweise das Empfangen des Eingangsgrößen-Verlaufs von einer Vorrichtung zum Erzeugen des Eingangsgrößen-Verlaufs, beispielsweise einem Optimierer oder einem Regler, oder von einer Speichervorrichtung, in der beispielsweise eine Tabelle mit unterschiedlichen Eingangsgrößen-Verläufen hinterlegt ist. Alternativ kann das Erhalten des Eingangsgrößen-Verlaufs das Erzeugen eines Eingangsgrößen-Verlaufs enthalten. Dazu können unterschiedliche Verfahren eingesetzt werden. Zum Beispiel kann dazu unter analoger Anwendung des erfindungsgemäßen Verfahrens ein Wirkgrößen-Verlauf des zweiten Wirkmechanismus erzeugt werden und der erzeugte Wirkgrößen-Verlauf des zweiten Wirkmechanismus als Eingangsgrößen-Verlauf des ersten Wirkmechanismus genutzt werden. Alternativ kann unter analoger Anwendung des erfindungsgemäßen Verfahrens ein Wirkgrößen-Verlauf eines dem zweiten vorangehenden dritten Wirkmechanismus erzeugt werden und der erzeugte Wirkgrößen-Verlauf als Eingangsgrößen-Verlauf des ersten oder des zweiten Wirkmechanismus genutzt werden. Das Erhalten des Eingangsgrößen-Verlaufs des ersten Wirkmechanismus kann auch das Messen des Eingangsgrößen-Verlaufs des ersten Wirkmechanismus enthalten.

Jede für je einen Eingangsgrößen-Teilverlauf charakteristische Größe kann einen entsprechenden Eingangsgrößen-Teilverlauf, insbesondere ein entsprechendes Intervall des Eingangsgrößen-Verlaufs, und/oder Informationen zu dem entsprechenden Eingangsgrößen-Teilverlauf, beispielsweise einen maximalen Hub des Eingangsgrößen-Teilverlaufs oder eines Integrals des entsprechenden Eingangsgrößen-Teilverlaufs, enthalten.

Das Bestimmen von für je einen Eingangsgrößen-Teilverlauf charakteristischen Größen auf Grundlage des Eingangsgrößen-Verlaufs kann das Zerlegen des Eingangsgrößen-Verlaufs in zeitlich aufeinanderfolgende Eingangsgrößen-Teilverläufe umfassen, zum Beispiel ein Diskretisieren des Eingangsgrößen-Verlaufs. Der Eingangsgrößen-Verlauf kann nach festen zeitlichen Intervallen oder nach Schwellwerten im Eingangsgrößen-Verlauf zerlegt werden. Alternativ kann der Eingangsgrößen-Verlauf integriert oder differenziert werden und das Integral bzw. das Differential des Eingangsgrößen-Verlaufs nach festen zeitlichen Intervallen oder nach Schwellwerten zerlegt werden. Die Eingangsgrößen-Teilverläufe können sich über gleiche oder unterschiedliche Zeitintervalle erstrecken. Die Zeitintervalle können beliebig oder in Abhängigkeit von Öffnungsphasen des Injektors, insbesondere Vor-, Haupt- und Nacheinspritzungen zerlegt werden. Vorzugsweise unterscheiden sich die Zeitintervalle jedoch von den Intervallen der Vor-, Haupt- und Nacheinspritzungen. Beispielsweise erstrecken sich die Eingangsgrößen-Teilverläufe über Zeitintervalle, die kleiner sind als die Intervalle der Vor-, Haupt- und Nacheinspritzungen. Das Bestimmen von für je einen Eingangsgrößen-Teilverlauf charakteristischen Größen kann weiterhin das Bilden der für je einen Eingangsgrößen-Teilverlauf charakteristischen Größen auf Grundlage der Eingangsgrößen-Teilintervalle enthalten.

Beispielsweise kann das Bestimmen von für je einen Eingangsgrößen-Teilverlauf charakteristischen Größen das Bilden eines Eingangsgrößen-Verlaufsintegrals, das Zerlegen des Eingangsgrößen-Verlaufsintegrals in Intervalle und das Bilden der für je einen Eingangsgrößen-Teilverlauf charakteristischen Größen auf Grundlage der Intervalle des Eingangsgrößen-Verlaufsintegrals, wobei jedes Intervall einem der Eingangsgrößen-Teilverläufe zugeordnet ist, umfassen.

Beispielsweise erfolgt das Zerlegen des Eingangsgrößen-Verlaufsintegrals in Eingangsgrößen-Teilverläufe nach einer Rechteckmethode. Dazu wird das Eingangsgrößen-Verlaufsintegral in Eingangsgrößen-Teilverlaufsintegrale eingeteilt, während denen sich die Eingangsgröße um einen vorgegebenen Prozentsatz eines Maximalhubs des Eingangsgrößen-Verlaufsintegrals erhöht oder erniedrigt. Der Maximalhub des Eingangsgrößen-Verlaufsintegrals kann eine Differenz zwischen einem Minimum des Eingangsgrößen-Verlaufsintegrals, insbesondere einem globalen Minimum eines Arbeitszyklus, und einem Maximum des Eingangsgrößen-Verlaufsintegrals, insbesondere einem globalen Maximum des Arbeitszyklus, sein. Es wird also ausgehend von einem Startzeitpunkt oder einem Kurbelwellenwinkel ein Intervall gewählt, innerhalb dessen sich das Eingangsgrößen-Verlaufsintegral um den vorbestimmten Prozentsatz des Maximalhubs des Eingangsgrößen-Verlaufsintegrals erhöht oder erniedrigt.

Beispielsweise kann der Prozentsatz durch eine Bestimmungsvorschrift gegeben sein. Vorzugsweise ergibt sich bei komplexen Bestimmungsvorschriften ein größerer Prozentsatz als bei einfachen Bestimmungsvorschriften. Alternativ oder zusätzlich kann der Prozentsatz von Güteanforderungen des Modells abhängen. Bei steigenden Güteanforderungen kann der Prozentsatz somit entsprechend abnehmen. Beispielsweise können während des Öffnens und Schließens der Düsennadel des Injektors kleinere Prozentsätze genutzt werden als während der Zeit zwischen dem Öffnen und Schließen der Düsennadel.

Zum Beispiel liegt der vorgegebene Prozentsatz im Bereich von 0,1% bis 10 % des Maximalhubs des Eingangsgrößen-Verlaufsintegrals. Der vorgegebene Prozentsatz kann für die Zerlegung des gesamten Eingangsgrößen-Verlaufsintegrals gleich sein oder unterschiedlich gewählt sein. Beispielsweise kann sich der vorgegebene Prozentsatz abhängig von der Einspritzphase unterscheiden. Zum Beispiel können in frühen und/oder späten Einspritzphasen, beispielsweise bei der Vor- und/oder der Nacheinspritzung geringere Prozentsätze verwendet werden als bei der Haupteinspritzung.

Zum Beispiel werden die Zeitpunkte bzw. Kurbelwellenwinkel und jeweils ein innerhalb des zugehörigen Intervalls maximal erreichter Hub des Eingangsgrößen-Verlaufsintegrals als für je einen der Eingangsgrößen-Teilverläufe charakteristische Größen in einer Tabelle abgespeichert. Die charakteristischen Größen können Datentupel sein, die einen mit einer Zeitspanne verknüpften Zeitpunkt eines Eingangsgrößen-Teilverlaufs und eine Quantität der Eingangsgröße während dieser Zeitspanne beschreiben.

Das Ermitteln jeweils eines Wirkgrößen-Teilverlaufs zu jeder für je einen der Eingangsgrößen-Teilverläufe charakteristischen Größe erfolgt, wie oben bereits erwähnt, mit Hilfe einer Ermittlungsvorschrift. Die Ermittlungsvorschrift kann eine Verschiebung, Streckung und/oder Stauchung jeder für je einen der Eingangsgrößen-Teilverläufe charakteristischen Größe zu dem entsprechenden Wirkgrößen-Teilverlauf bewirken. Beispielsweise ist die Ermittlungsvorschrift eine empirische oder physikalische Ermittlungsvorschrift oder enthält eine solche.

Zum Beispiel kann die Ermittlungsvorschrift eine Formfunktion sein. Die Formfunktion kann eine Vibefunktion, eine Verzögerungsfunktion, eine Filterfunktion, eine Dreieck- oder Rechteckfunktion und/oder eine andere mathematische Funktion zum Erzeugen eines Wirkgrößen-Teilverlaufs sein oder enthalten. Die Filterfunktion kann eine pT1-Filterfunktion, wie sie zum Beispiel in einem pT1-Glied zum Einsatz kommt, oder eine Butterworthfunktion, wie sie zum Beispiel in einem Butterworthfilter zum Einsatz kommt, oder eine andere Filterfunktion sein.

Alternativ kann die Ermittlungsvorschrift auf einem physikalischen Modell basieren. Das physikalische Modell kann beispielsweise eine Bernoulli-Durchflussgleichung, ein Zündverzugsverlauf, ein Nadelhub aus einem Spulenmodell, einer Kraft-Weg-Kennlinie und/oder einer Massenträgheit sein. Der Zündverzugsverlauf beschreibt den Verlauf des zeitlichen Verzugs zwischen einer Energieeinbringung, beispielsweise einer Einspritzung, und einer Energieumsetzung, beispielsweise einer Verbrennung.

Zum Ermitteln der jeweiligen Wirkgrößen-Teilverläufe können für die verwendete Ermittlungsvorschrift charakteristische Parameter erhalten werden, die beispielsweise manuell oder automatisch zur Verfügung gestellt werden können. Die Parameter können beispielsweise geometrische Maße der Verbrennungskraftmaschine und/oder des Einspritzsystems, physikalische Konstanten, Parameter eines Black-Box-Modells, Filterzeitkonstanten, Filterkoeffizienten, Verzögerungszeiten, Zeitdauern oder andere Größen umfassen. Wird beispielsweise die Vibefunktion als Ermittlungsvorschrift eingesetzt, so können die Parameter beispielsweise einen Formfaktor der Vibefunktion enthalten. Bei Verwendung der Bernoulli-Gleichung können die Parameter hingegen die geometrischen Maße des Injektors enthalten.

Das Ermitteln der jeweiligen Wirkgrößen-Teilverläufe kann in Abhängigkeit von Umgebungsbedingungen erfolgen. Beispielsweise können eine Drehzahl einer Kurbelwelle der Verbrennungskraftmaschine, Eigenschaften eines Brennraums der Verbrennungskraftmaschine (wie beispielsweise eine Wandtemperatur), Eigenschaften des Einspritzsystems (wie beispielsweise der Raildruck und/oder eine Kraftstofftemperatur im Rail), ein Gaszustand in einem Einlasskanal der Verbrennungskraftmaschine (wie beispielsweise ein Gasdruck, eine Gastemperatur, ein Drall und/oder ein Sauerstoffanteil), ein Gaszustand in einem Auslasskanal der Verbrennungskraftmaschine (wie beispielsweise ein Abgasdruck, eine Abgastemperatur und/oder ein Sauerstoffanteil) und/oder ein Gaszustand im Brennraum (wie beispielsweise ein Gasdruck, eine Gastemperatur und/oder ein Sauerstoffanteil) berücksichtigt werden. Alternativ oder zusätzlich können ein Umgebungsdruck, eine Umgebungstemperatur, eine Motortemperatur, eine Luftfeuchtigkeit und/oder eine Batteriespannung berücksichtigt werden.

Für die Ermittlung eines Wirkgrößen-Teilverlaufs der physikalischen Wirkgröße zu einer für einen ersten Eingangsgrößen-Teilverlauf charakteristischen Größe kann eine erste Ermittlungsvorschrift verwendet werden, während für die Ermittlung eines Wirkgrößen-Teilverlaufs derselben physikalischen Größe zu einer für einen zweiten Eingangsgrößen-Teilverlauf charakteristischen Größe eine zweite Ermittlungsvorschrift, die sich von der ersten Ermittlungsvorschrift unterscheidet, verwendet werden kann. So können beispielsweise für Einspritzteilverläufe während einer frühen und/oder einer späten Einspritzphase charakteristische Größen mit der ersten Ermittlungsvorschrift in Teilbrennverläufe umgewandelt werden und für Einspritzteilverläufe während einer mittleren Einspritzphase charakteristische Größen mit der zweiten Ermittlungsvorschrift in Teilbrennverläufe umgewandelt werden. Auch der Einsatz weiterer unterschiedlicher Ermittlungsvorschriften ist möglich. So können in Phasen, während denen eine Güte der Wirkgrößen-Teilverläufe durch eine rechenintensive Ermittlungsvorschrift wesentlich beeinflusst wird, rechenaufwendigere Ermittlungsvorschriften zum Einsatz kommen, während in anderen Phasen, während denen die Güte der Wirkgrößen-Teilverläufe durch eine rechenintensive Ermittlungsvorschrift nicht wesentlich beeinflusst wird, weniger aufwendige Ermittlungsvorschriften zum Einsatz kommen. Insgesamt kann dadurch die Qualität des Wirkgrößen-Verlaufs verbessert werden und der Rechenaufwand in Grenzen gehalten werden. Dadurch kann der Rechenaufwand bei vergleichbarer Ergebnisqualität minimiert werden.

Alternativ oder zusätzlich können für die Ermittlung eines Wirkgrößen-Teilverlaufs zu einer für einen ersten Eingangsgrößen-Teilverlauf charakteristischen Größe erste Parameter verwendet werden, während für die Ermittlung eines Wirkgrößen-Teilverlaufs derselben physikalischen Größe zu einer für einen zweiten Eingangsgrößen-Teilverlauf charakteristischen Größe zweite Parameter eingesetzt werden, die sich von den ersten Parametern unterscheiden.

In manchen Ausführungsbeispielen kann das Ermitteln des Wirkgrößen-Teilverlaufs das Ermitteln jeweils eines Wirkgrößen-Teilverlaufs des ersten Wirkmechanismus zu jeder für je einen der Eingangsgrößen-Teilverläufe des Eingangsgrößen-Verlaufs des ersten oder zweiten Wirkmechanismus charakteristischen Größe mit Hilfe der Ermittlungsvorschrift umfassen und das Bestimmen des Wirkgrößen-Verlaufs des ersten Wirkmechanismus kann das Überlagern der Wirkgrößen-Teilverläufe zu dem Wirkgrößen-Verlauf des ersten Wirkmechanismus umfassen. Beispielsweise kann zum Ermitteln eines Brennverlaufs zu jeder für einen Einspritz-Teilverlauf eines eingeteilten Einspritzverlaufs charakteristischen Größe beispielsweise mittels eines Zündverzugsverlaufs und einer Vibefunktion jeweils ein Teilbrennverlauf ermittelt werden und die Teilbrennverläufe zu dem Brennverlauf überlagert werden. Alternativ kann zum Ermitteln eines Brennverlaufs zu jeder für einen Gemischbildungs-Teilverlauf eines eingeteilten Gemischbildungsverlaufs charakteristischen Größe beispielsweise mittels einer Vibefunktion jeweils ein Teilbrennverlauf ermittelt werden und die Teilbrennverläufe können zu dem Brennverlauf überlagert werden. Alternativ oder Zusätzlich ist die Auswertung jedes Teilverlaufs zur Bildung von Kennwerten wie Wärmemenge, Verbrennungslage und indiziertem Moment möglich.

In manchen Ausführungsbeispielen kann das Ermitteln eines Wirkgrößen-Teilverlaufs das Ermitteln eines Wirkgrößen-Teilverlaufs des zweiten Wirkmechanismus zu jeder für einen der Eingangsgrößen-Teilverläufe des Eingangsgrößen-Verlaufs des zweiten Wirkmechanismus charakteristischen Größe mit Hilfe der Ermittlungsvorschrift umfassen und das Bestimmen des Wirkgrößen-Verlaufs des ersten Wirkmechanismus kann das Ermitteln eines Wirkgrößen-Teilverlaufs des ersten Wirkmechanismus zu jeder für einen der Wirkgrößen-Teilverläufe des zweiten Wirkmechanismus charakteristischen Größe mit Hilfe einer weiteren Ermittlungsvorschrift und das Überlagern der Wirkgrößen-Teilverläufe des ersten Wirkmechanismus zu dem Wirkgrößen-Verlauf des ersten Wirkmechanismus umfassen. Zum Beispiel kann zum Erzeugen eines Brennverlaufs zu jeder für einen Einspritz-Teilverlauf eines eingeteilten Einspritzverlaufs charakteristischen Größe mittels einer Verschiebefunktion jeweils ein Gemischbildungs-Teilverlauf ermittelt werden. Zu jeder für einen Gemischbildungs-Teilverlauf charakteristischen Größe kann dann beispielsweise mittels einer Vibefunktion jeweils ein Teilbrennverlauf ermittelt werden. Die Teilbrennverläufe können zu dem Brennverlauf überlagert werden.

In manchen Ausführungsbeispielen kann das Ermitteln eines Wirkgrößen-Teilverlaufs das Ermitteln eines Wirkgrößen-Teilverlaufs des zweiten Wirkmechanismus zu jeder für einen der Eingangsgrößen-Teilverläufe des Eingangsgrößen-Verlaufs des zweiten Wirkmechanismus charakteristischen Größe mit Hilfe der Ermittlungsvorschrift umfassen und das Bestimmen des Wirkgrößen-Verlaufs des ersten Wirkmechanismus kann das Bestimmen eines Wirkgrößen-Verlaufs des zweiten Wirkmechanismus auf Grundlage der Wirkgrößen-Teilverläufe des zweiten Wirkmechanismus als Eingangsgrößen-Verlauf des ersten Wirkmechanismus, das Bestimmen von für je einen Eingangsgrößen-Teilverlauf des Eingangsgrößen-Verlaufs des ersten Wirkmechanismus charakteristischen Größen des ersten Wirkmechanismus auf Grundlage des Wirkgrößen-Verlaufs des zweiten Wirkmechanismus, das Ermitteln eines Wirkgrößen-Teilverlaufs des ersten Wirkmechanismus zu jeder für einen der Eingangsgrößen-Teilverläufe des ersten Wirkmechanismus charakteristischen Größe mit Hilfe einer weiteren Ermittlungsvorschrift und das Überlagern der Wirkgrößen-Teilverläufe des ersten Wirkmechanismus zu dem Wirkgrößen-Verlauf des ersten Wirkmechanismus umfassen. Zum Beispiel kann zum Erzeugen eines Brennverlaufs zu jeder für einen Einspritz-Teilverlauf eines eingeteilten Einspritzverlaufs charakteristischen Größe mittels einer Verschiebefunktion jeweils ein Gemischbildungs-Teilverlauf ermittelt werden und die Gemischbildungs-Teilverläufe können zu einem Gemischbildungs-Verlauf überlagert werden. Auf Grundlage des Gemischbildungs-Verlaufs können dann für je einen Gemischbildungs-Teilverlauf des neu eingeteilten Gemischbildungs-Verlaufs charakteristische Größen bestimmt werden und zu jeder für einen Gemischbildungs-Teilverlauf charakteristischen Größe kann dann beispielsweise mittels einer Vibefunktion jeweils ein Teilbrennverlauf ermittelt werden. Die Teilbrennverläufe können zu dem Brennverlauf überlagert werden. Durch die unabhängige Einteilung des Eingangsgrößen-Verlaufs des zweiten Wirkmechanismus und des Wirkgrößen-Verlaufs des zweiten Wirkmechanismus kann individuell entschieden werden, wie fein die Einteilung sein soll, um einen Wirkgrößen-Verlauf optimaler Güte zu erhalten und gleichzeitig den Rechenaufwand so gering wie möglich zu halten.

In manchen Ausführungsbeispielen kann das Erhalten des Eingangsgrößen-Verlaufs das Erhalten unterschiedlicher Eingangsgrößen-Verläufe der physikalischen Eingangsgröße des ersten oder zweiten Wirkmechanismus umfassen, das Bestimmen von für je einen Eingangsgrößen-Teilverlauf des Eingangsgrößen-Verlaufs charakteristischen Größen auf Grundlage des Eingangsgrößen-Verlaufs das Bestimmen von für je einen Eingangsgrößen-Teilverlauf des Eingangsgrößen-Verlaufs charakteristischen Größen auf Grundlage des jeweiligen der unterschiedlichen Eingangsgrößen-Verläufe umfassen, und das Ermitteln des Wirkgrößen-Teilverlaufs das Ermitteln eines Wirkgrößen-Teilverlaufs zu jeder für je einen der Eingangsgrößen-Teilverläufe charakteristischen Größe für jeden der unterschiedlichen Eingangsgrößen-Verläufe mit Hilfe einer oder mehrerer Ermittlungsvorschriften umfassen. In diesen Ausführungsbeispielen kann das Bestimmen des Wirkgrößen-Verlaufs das Bestimmen eines Test-Wirkgrößen-Verlaufs für jeden der unterschiedlichen Eingangsgrößen-Verläufe, das Vergleichen der bestimmten Test-Wirkgrößen-Verläufe mit einem Wirkgrößen-Sollverlauf der Verbrennungskraftmaschine und das Auswählen des Test-Wirkgrößen-Verlaufs mit der besten Übereinstimmung mit dem Wirkgrößen-Sollverlauf der Verbrennungskraftmaschine als optimalen Wirkgrößen-Verlauf umfassen. Die Test-Wirkgrößen-Verläufe werden beispielsweise wie in den vorangehenden Abschnitten beschrieben erzeugt.

Durch das Erzeugen von Test-Wirkgrößen-Verläufen für unterschiedliche Eingangsgrößen-Verläufe derselben physikalischen Größe und das Vergleichen dieser mit einem Soll-Wirkgrößen-Verlauf kann ein Test-Wirkgrößen-Verlauf mit der besten Übereinstimmung mit dem Soll-Wirkgrößen-Verlauf gewählt werden. Beispielsweise kann eine Verbrennungskraftmaschine unter Nutzung eines dem Test-Wirkgrößen-Verlauf mit der besten Übereinstimmung zugrundeliegenden Ansteuerverlaufs der Einspritzung, beispielsweise entsprechenden Einspritzparametern und gegebenenfalls eines entsprechenden Raildrucks, gesteuert werden, um beispielsweise einen Brennverlauf zu realisieren, der im Wesentlichen dem Wirkgrößen-Sollverlauf entspricht.

Die Eingangsgrößen-Verläufe können in einer Speichereinheit in einer Tabelle hinterlegt sein und abgelesen werden. Alternativ können die Eingangsgrößen-Verläufe von einem Optimierer bereitgestellt werden. Der Optimierer ist beispielsweise dazu ausgelegt, automatisch eine Tabelle mit plausiblen Eingangsgrößen-Verläufen zu generieren.

Das Verfahren zum Ermitteln eines Wirkgrößen-Verlaufs kann an einem Prüfstand oder in einem fertigen Fahrzeug, Schiff und/oder Generator Anwendung finden. Je nach Anwendung können die Eingangsgrößen-Verläufe variieren.

Am Prüfstand können in einem ersten Verfahrensabschnitt zum Beispiel sehr unterschiedliche Eingangsgrößen-Verläufe zur Verfügung stehen, um Eingangsgrößen-Verläufe zu finden, die in einem Wirkgrößen-Verlauf resultieren, der sich nur geringfügig von dem Soll-Wirkgrößen-Verlauf unterscheidet. In einem weiteren Verfahrensabschnitt können dann den im ersten Verfahrensabschnitt gefundenen Eingangsgrößen-Verläufen ähnliche Eingangsgrößen-Verläufe und/oder die gefundenen Eingangsgrößen-Verläufe zur Verfügung stehen, um den oder die Eingangsgrößen-Verläufe zu finden, die in einem Wirkgrößen-Verlauf resultierten, der dem Soll-Wirkgrößen-Verlauf im Wesentlichen entspricht. So können beispielsweise aus unterschiedlichen Einspritzparametern die Einspritzparameter gewählt werden, die im Wesentlichen in dem Soll-Brennverlauf resultieren, um so optimale Einspritzparameter für eine neue Verbrennungskraftmaschine oder ein neues Einspritzsystem zu bestimmen.

Im fertigen Fahrzeug können einander ähnelnde Eingangsgrößen-Verläufe gespeichert sein, von denen dann der Eingangsgrößen-Verlauf ausgewählt wird, der in einem Wirkgrößen-Verlauf resultiert, der dem Soll-Wirkgrößen-Verlauf im Wesentlichen entspricht. Alternativ kann beispielsweise ausgehend von einem vorab gewählten Eingangsgrößen-Verlauf ein Wirkgrößen-Verlauf ermittelt werden, um diesen mit einem Soll-Wirkgrößen-Verlauf zu vergleichen. Im Fahrzeug kann so abhängig vom Vergleichsergebnis beispielsweise verifiziert werden, ob der ausgewählte Eingangsgrößen-Verlauf tatsächlich für den angeforderten Betrieb der Verbrennungskraftmaschine geeignet ist.

Zudem kann beispielsweise ausgehend von einem vorab gewählten Eingangsgrößen-Verlauf ein Wirkgrößen-Verlauf ermittelt werden, um diesen mit einem gemessenen Wirkgrößen-Verlauf zu vergleichen. Auf Grundlage von Abweichungen zwischen dem ermittelten Wirkgrößen-Verlauf und dem gemessenen Wirkgroßen-Verlauf können Parameter des Modells, die dem gewählten Eingangsgrößenverlauf zugrunde liegen, nachgestellt werden. Die Veränderung der Parameter kann als Diagnose für Fehler des Systems angewendet werden. Zum Beispiel lässt sich so eine Alterung des Injektors, beispielsweise eine Verkokung im Injektor, ein Defekt eines Temperatursensors oder eine Kraftstoffänderung feststellen.

Die vorliegende Erfindung betrifft weiterhin eine Steuervorrichtung zum Ermitteln eines Wirkgrößen-Verlaufs einer physikalischen Wirkgröße eines ersten Wirkmechanismus einer motorischen Wirkkette einer Verbrennungskraftmaschine. Die Steuervorrichtung ist dazu ausgebildet das beschriebene Verfahren zum Ermitteln eines Wirkgrößen-Verlaufs durchzuführen. Die Steuervorrichtung kann Bestandteil einer Verbrennungskraftmaschine beispielsweise eines Kraftfahrzeugs, eines Schiffs oder eines Generators sein. Alternativ kann die Steuervorrichtung Teil eines Prüfstands zur Entwicklung einer solchen Verbrennungskraftmaschine sein.

Die Steuervorrichtung kann einen Prozessor, beispielsweise einen Mikroprozessor aufweisen. Die Steuervorrichtung kann einen Paketplaner zum Einteilen der Eingangsgrößen-Verläufe in Eingangsgrößen-Teilverläufe (Pakete) und einen Verlaufsgenerator zum Ermitteln jeweils eines Wirkgrößen-Teilverlaufs zu jedem der Eingangsgrößen-Teilverläufe aufweisen. Der Paketplaner und der Verlaufsgenerator können als eine Software implementiert sein, um den Paketplaner und den Verlaufsgenerator auf einem Mikroprozessor, beispielsweise einem Mikroprozessor einer Motorsteuerung, ausführen zu können. Weiterhin können die Algorithmen in einem Spezialprozessor als Rechenwerke in Hardware implementiert sein.

Die Steuervorrichtung kann weiterhin einen Datenspeicher zum Speichern von Ermittlungsvorschriften, Bestimmungsvorschriften, charakteristischen Größen, Parametern, Eingangsgrößen-Verläufen, Soll-Wirkgrößen-Verläufen und/oder weiteren Größen enthalten. Die Steuervorrichtung kann weiter Signaleingänge zum Erhalten von Eingangsgrößen-Verläufen, Parametern und/oder Umgebungsbedingungen enthalten. Weiter kann die Steuervorrichtung einen Signalausgang enthalten, um den Wirkgrößen-Verlauf oder eine oder mehrere auf Grundlage des Wirkgrößen-Verlaufs bestimmte Größen, beispielsweise einen ausgewählten Ansteuerverlauf des Injektors und einen Raildruck, auszugeben.

Die vorliegende Erfindung betrifft weiterhin eine Verbrennungskraftmaschine mit einer Steuervorrichtung zum Ermitteln eines Wirkgrößen-Verlaufs, wie sie oben beschrieben ist. Die Verbrennungskraftmaschine kann eine Dieselbrennkraftmaschine, beispielsweise eine Dieselbrennkraftmaschine mit Direkteinspritzung und/oder Common-Rail-Einspritzsystem, oder ein Ottomotor sein.

Die Verbrennungskraftmaschine kann beispielsweise Mittel, insbesondere Sensoren, zum Ermitteln von Eigenschaften und/oder Umgebungsbedingungen der Verbrennungskraftmaschine enthalten, beispielsweise zum Messen der Drehzahl der Kurbelwelle und/oder zum Bestimmen von Eigenschaften des Brennraums und/oder des Einspritzsystems und/oder von Zuständen in den gasführenden Komponenten der Verbrennungskraftmaschine. Die Sensoren sind vorzugsweise mit der Steuervorrichtung verbunden, beispielsweise über einen Datenbus. Die Steuervorrichtung kann teilweise oder vollständig in die Motorsteuerung integriert sein.

Die vorliegende Erfindung betrifft weiterhin ein Kraftfahrzeug, ein Schiff und/oder einen Generator mit einer Verbrennungskraftmaschine, wie sie oben beschrieben wurde.

Ausführungsbeispiele der Erfindung werden nun beispielhaft und unter Bezugnahme auf die beigefügten Zeichnungen beschrieben. Darin zeigen:
- Fig. 1: eine schematische Darstellung einer motorischen Wirkkette einer Verbrennungskraftmaschine mit verschiedenen Wirkmechanismen;
- Fig. 2A, 2B: einen beispielhaften Bestromungsverlauf eines Injektors als Eingangsgrößen-Verlauf und ein beispielhaftes Brennverlaufsintegral als Wirkgrößen-Verlauf, das ausgehend von dem Bestromungsverlauf ermittelt ist;
- Fig. 3: ein Flussdiagramm eines Verfahrens zum Erzeugen eines Brennverlaufs auf Grundlage eines Einspritzverlaufs;
- Fig. 4: eine schematische Darstellung einer erfindungsgemäßen Steuervorrichtung zum Ermitteln eines Brennverlaufs;
- Fig. 5: ein Integral eines auf dem Bestromungsverlauf aus Fig. 2A basierenden Einspritzverlaufs und die Bildung von für je einen der Einspritz-Teilverläufe charakteristischen Größen;
- Fig. 6: eine Tabelle zur Wiedergabe der für je einen der Einspritz-Teilverläufe charakteristischen Größen aus Fig. 5;
- Fig. 7A, 7B: aus den für je einen der Einspritz-Teilverläufe charakteristischen Größen ermittelte Teilbrennverläufe als Wirkgrößen-Teilverläufe und ein daraus bestimmter Brennverlauf;
- Fig. 8: ein beispielhafter Einspritzverlauf in Abhängigkeit des Kurbelwellenwinkels;
- Fig. 9: ein Flussdiagramm eines Verfahrens zum Bestimmen des Brennverlaufs aus für je einen der Gemischbildungs-Teilverläufe charakteristischen Größen, die aus dem Einspritzverlauf der Fig. 8 bestimmt sind;
- Fig. 10: ein aus den Gemischbildungs-Teilverläufen bestimmter Gemischbildungs-Verlauf;
- Fig. 11: ein aus dem in Fig. 10 dargestellten Gemischbildungs-Verlauf bestimmter Brennverlauf und diesem zugrundeliegende Teilbrennverläufe; und
- Fig. 12: ein Verfahren zur Bestimmung eines Brennverlaufs aus einer Vielzahl an Test-Brennverläufen durch Vergleich mit einem Soll-Brennverlauf.

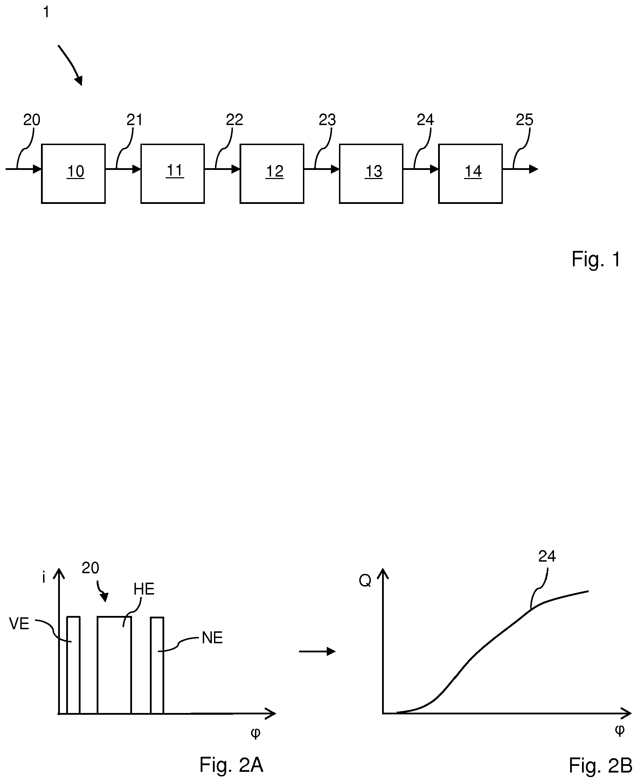

In Fig. 1 ist eine motorische Wirkkette 1 einer Verbrennungskraftmaschine mit verschiedenen Wirkmechanismen dargestellt. Zu den Wirkmechanismen gehören ein Nadelhub 10 eines Injektors eines Einspritzsystems der Verbrennungskraftmaschine, eine Einspritzung 11 von Kraftstoff in einen Brennraum der Verbrennungskraftmaschine, eine Aufbereitung 12 des Kraftstoffes in dem Brennraum, eine Energieumsetzung 13 des Kraftstoffs in dem Brennraum und ein Energietransport 14 der durch die Energieumsetzung gewonnenen Energie. Die Wirkkette 1 erstreckt sich von dem Nadelhub 10 über die Einspritzung 11, die Aufbereitung 12 und die Energieumsetzung 13 bis hin zu dem Energietransport 14.

Durch die Berücksichtigung dieser Wirkkette 1 kann ausgehend von einem Bestromungsverlauf 20 zum Ansteuern des Injektors, wie er in Fig. 2A in Abhängigkeit des Kurbelwellenwinkels ϕ der Verbrennungskraftmaschine dargestellt ist, ein realistischer Brennverlauf bestimmt werden, dessen direkte Bestimmung aus dem Bestromungsverlauf 20 nicht möglich ist. Ein Beispiel für ein Integral des Brennverlaufs 24 ist in Fig. 2B dargestellt.

Der Wirkmechanismus Nadelhub 10 beschreibt einen Zusammenhang zwischen dem Bestromungsverlauf 20 zum Ansteuern des Injektors als Eingangsgrößen-Verlauf und einem Nadelhubverlauf 21, der durch den Bestromungsverlauf 20 beeinflusst wird, als Wirkgrößen-Verlauf. Der Nadelhubverlauf 21 gibt an, zu welchem Zeitpunkt bzw. bei welchem Kurbelwellenwinkel ϕ der Injektor wie weit geöffnet wird.

Der Wirkmechanismus Einspritzung 11 beschreibt einen Zusammenhang zwischen dem Nadelhubverlauf 21, also dem Wirkgrößen-Verlauf des Wirkmechanismus Nadelhub 10, als Eingangsgrößen-Verlauf der Einspritzung 11 und einem Einspritzverlauf 22, der durch den Nadelhubverlauf 21 bewirkt wird. Der Einspritzverlauf 22 gibt an, zu welchem Zeitpunkt bzw. bei welchem Kurbelwellenwinkel ϕ wieviel Kraftstoff in den Brennraum der Verbrennungskraftmaschine eingespritzt wird.

Der Wirkmechanismus Aufbereitung 12 des eingespritzten Kraftstoffs beschreibt einen Zusammenhang zwischen dem Einspritzverlauf 22, also dem Wirkgrößen-Verlauf des Wirkmechanismus Einspritzung 11, als Eingangsgrößen-Verlauf der Aufbereitung 12 und einem Gemischbildungsverlauf 23, der durch den Einspritzverlauf 22 bewirkt wird. Der Gemischbildungsverlauf 23 gibt an, zu welchem Zeitpunkt bzw. bei welchem Kurbelwellenwinkel ϕ wieviel brennfähiges Gemisch in dem Brennraum der Verbrennungskraftmaschine bereitgestellt wird.

Der Wirkmechanismus Energieumsetzung 13 beschreibt einen Zusammenhang zwischen dem Gemischbildungsverlauf 23, also dem Wirkgrößen-Verlauf des Wirkmechanismus Aufbereitung 12, als Eingangsgrößen-Verlauf der Energieumsetzung 13 und einem Brennverlauf 24, der durch den Gemischbildungsverlauf 23 bewirkt wird. Der Brennverlauf 24 gibt die im Brennraum aus dem aufbereiteten Kraftstoff umgesetzte Energie an.

Der Wirkmechanismus Energietransport 14 beschreibt einen Zusammenhang zwischen dem Brennverlauf 24, also dem Wirkgrößen-Verlauf des Wirkmechanismus Energieumsetzung 13, als Eingangsgrößen-Verlauf des Energietransports 14 und einem Heizverlauf 25, der durch den Brennverlauf 24 bewirkt wird. Der Heizverlauf 25 gibt einen im Brennraum beobachtbaren Wärmemengenverlauf an, bei dem eine Wandwärmeenergie bereits abgeführt ist.

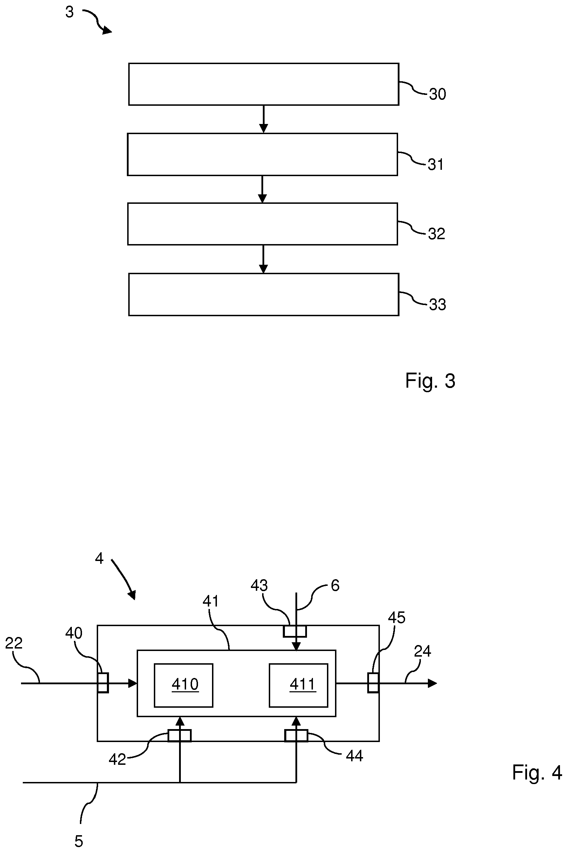

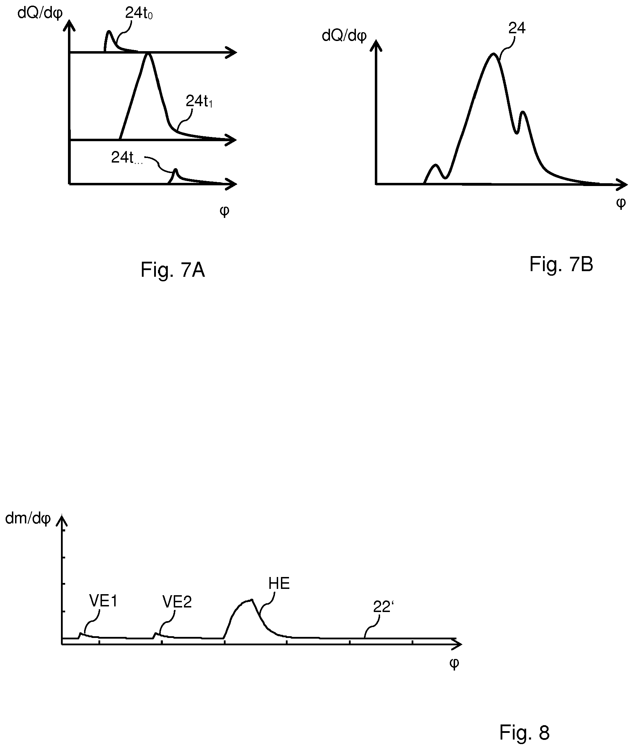

Der Zusammenhang zwischen jedem der Eingangsgrößen-Verläufe eines bestimmten Wirkmechanismus und dem Wirkgrößen-Verlauf des bestimmten Wirkmechanismus oder eines auf diesen nachfolgenden Wirkmechanismus kann sehr gut mit Hilfe des erfindungsgemäßen Verfahrens 3 hergestellt werden. Nachfolgend wird das erfindungsgemäße Verfahren 3 und eine zum Durchführen des Verfahrens vorgesehenen Steuervorrichtung 4 anhand eines ersten Ausführungsbeispiels mit Bezug auf Fig. 3 bis Fig. 7B beschrieben.

In Fig. 3 wird bei 30 ein Einspritzverlauf 22 mit einer Voreinspritzung VE, einer Haupteinspritzung HE und einer Nacheinspritzung NE als Eingangsgrößen-Verlauf der der Energieumsetzung 13 vorangehenden Aufbereitung 12 erhalten. Dazu weist die Steuervorrichtung 4, wie in Fig. 4 gezeigt, einen Signaleingang 40 zum Empfangen des Einspritzverlaufs 22 auf. Der Einspritzverlauf 22 ist auf Grundlage des in Fig. 2A gezeigten Bestromungsverlaufs 20 bestimmt worden.

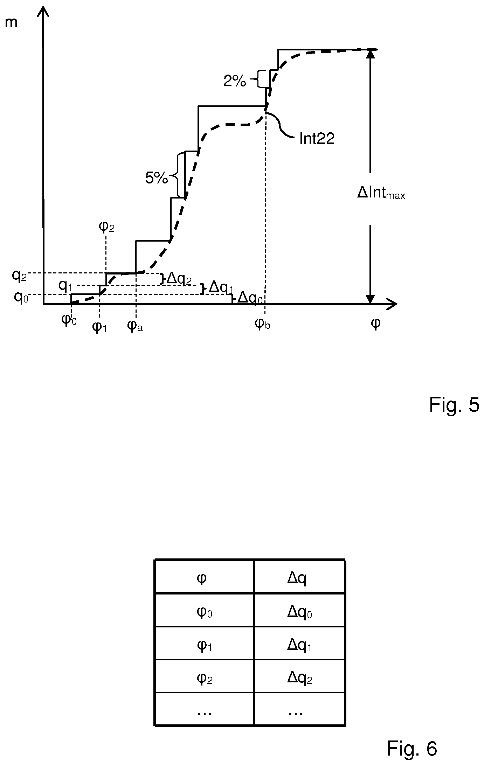

Bei 31 werden auf Grundlage des Einspritzverlaufs 22 für je einen von mehreren Einspritz-Teilverläufen charakteristische Größen bestimmt. Dabei wird ein Einspritzverlaufsintegral Int22 des Einspritzverlaufs 22 gebildet, wie es in Fig. 5 in Abhängigkeit des Kurbelwellenwinkels ϕ gezeigt ist. Das Einspritzverlaufsintegral Int22 wird dann mit Hilfe einer Rechteckmethode in Einspritz-Teilverlaufsintegrale unterteilt. Dazu wird ein Maximalhub ΔIntₘₐₓ des Einspritzverlaufsintegrals Int22 bestimmt und einem Kurbelwellenwinkel ϕ₀ am Beginn des Einspritzverlaufsintegrals Int22 eine charakteristische Größe Δq₀ zugeordnet, die einem Prozentsatz von 1% des Maximalhubs ΔIntₘₐₓ entspricht. Anschließend wird ein Kurbelwellenwinkel ϕ₁ gewählt, bei dem das Einspritzverlaufsintegral Int22 den Funktionswert q₀ annimmt, wobei für den Funktionswert q₀ im vorliegenden Beispiel gilt: q₀ = 0 + Δq₀. Dem Kurbelwellenwinkel ϕ₁ wird eine charakteristische Größe Δq₁ zugeordnet, die einem Prozentsatz von 1% des Maximalhubs ΔIntₘₐₓ entspricht. Auf Grundlage eines Funktionswertes q₁, der der Summe aus dem Funktionswert q₀ und der charakteristischen Größe Δq₁ entspricht, wird ein Kurbelwellenwinkel ϕ₂ gewählt, bei dem das Einspritzverlaufsintegral Int22 den Funktionswert q₁ annimmt. Dem Kurbelwellenwinkel ϕ₂ wird dann eine charakteristische Größe Δq₂, die einem Prozentsatz von 1% des Maximalhubs ΔIntₘₐₓ entspricht, zugeordnet. Entsprechend werden weitere Kurbelwellenwinkel ϕ₃, ϕ... gewählt und diesen charakteristische Größen Δq₃, Δq... zugeordnet. Ab einem Grenzkurbelwellenwinkel ϕₐ, der zwischen der Voreinspritzung VE und der Haupteinspritzung HE liegt, erhöht sich der Prozentsatz auf 5% des Maximalhubs ΔIntₘₐₓ und ab einem Grenzkurbelwellenwinkel ϕ_{b}, der im Bereich der Nacheinspritzung NE liegt, sinkt der Prozentsatz auf 2% ab. Alle Werte werden in einer Tabelle, wie sie in Fig. 6 dargestellt ist, abgelegt.

Zum Bestimmen der für je einen der Einspritz-Teilverläufe charakteristischen Größen, hier die charakteristischen Größen Δq₀, Δq₁, Δq₂, Δq..., weist die Steuervorrichtung 4 einen Prozessor 41 auf, der als Paketplaner 410 ausgelegt ist. Über einen Signaleingang 42 erhält der Prozessor 41 Parameter 5, auf denen die Einteilung basiert, beispielsweise die Anzahl an zu erzeugenden Teilverläufen (Paketzahl) und deren Größe.

Bei 32 wird zu dem Wert Aq₀ am Kurbelwellenwinkel ϕ₀ ein Teilbrennverlauf 24t₀ mit Hilfe eines Zündverzugs am Kurbelwellenwinkel ϕ₀ ermittelt. Entsprechend wird jeweils ein Teilbrennverlauf 24t₁, 24t... zu jeder der weiteren charakteristischen Größen Δq₁, Δq₂, Δq... an den Kurbelwellenwinkeln ϕ₁, ϕ₂, ϕ... ermittelt. Als Ermittlungsvorschrift wird hier ein Zündverzugsverlauf zugrunde gelegt. Der Zündverzugsverlauf ist in einem Datenspeicher (nicht gezeigt) der Steuervorrichtung 4 hinterlegt. Durch die Einteilung in Teilverläufe kann für kleine Teilelemente ein individueller Teilbrennverlauf ermittelt werden und eine verzögerte Verbrennung einzelner Kraftstofftropfen berücksichtigt werden.

Zum Ermitteln der Teilbrennverläufe 24t₀, 24t₁, 24t... ist der Prozessor 41 der Steuervorrichtung 4 außerdem als Verlaufsgenerator 411 ausgelegt. Über einen Signaleingang 43 der Steuervorrichtung 4 erhält der Prozessor 41 Umgebungsbedingungen 6 und über einen Signaleingang 44 der Steuervorrichtung 4 erhält der Prozessor 41 weitere Parameter 5, auf denen die Ermittlung der Teilbrennverläufe 24t₀, 24t₁, 24t... beruht.

Bei 33 wird durch Überlagern der ermittelten Teilbrennverläufe 24t₀, 24t₁, 24t... ein Brennverlauf 24 bestimmt. Diese Aufgabe übernimmt auch der Verlaufsgenerator 411 der Steuervorrichtung 4. Über einen Signalausgang 45 wird der Brennverlauf 24 ausgegeben, um ihn zum Betrieb der Verbrennungskraftmaschine einzusetzen.

Nachfolgend wird das erfindungsgemäße Verfahren 3 anhand eines weiteren Ausführungsbeispiels mit Bezug auf Fig. 3 und Fig. 8 bis Fig. 11 beschrieben.

Bei 30 wird ein Einspritzverlauf 22' mit zwei Voreinspritzungen VE1, VE2 und einer Haupteinspritzung HE als Eingangsgrößen-Verlauf der Aufbereitung 12 erhalten.

Bei 31 werden auf Grundlage des Einspritzverlaufs 22' für je einen von mehreren Einspritz-Teilverläufen charakteristische Größen bestimmt. Dazu wird ein Integral des Einspritzverlaufs 22' gebildet und dieses, wie hinsichtlich des ersten Ausführungsbeispiels beschrieben, in Kurbelwellenintervalle mit Startpunkten bei den Kurbelwellenwinkeln ϕ₀, ϕ₁, ϕ₂, ϕ... und diesen zugeordnete charakteristische Größen Δq₀, Δq₁, Δq₂, Δq... eingeteilt.

Bei 32 wird zu jeder charakteristischen Größe Δq₀, Δq₁, Δq₂, Δq... an den entsprechenden Kurbelwellenwinkeln ϕ₀, ϕ₁, ϕ₂, ϕ... mit Hilfe einer zeitlichen Verschiebung der Gemischbildung an den Kurbelwellenwinkeln ϕ₀, ϕ₁, ϕ₂, ϕ... jeweils ein Gemischbildungs-Teilverlauf ermittelt. Als Ermittlungsvorschrift wird hier ein Gemischbildungsverzugsverlauf zugrunde gelegt. Mit Hilfe der Gemischbildungs-Teilverläufe kann für kleine Intervalle ein individueller Gemischbildungsverlauf ermittelt werden und eine verlangsamte Gemischbildung einzelner Kraftstofftropfen berücksichtigt werden.

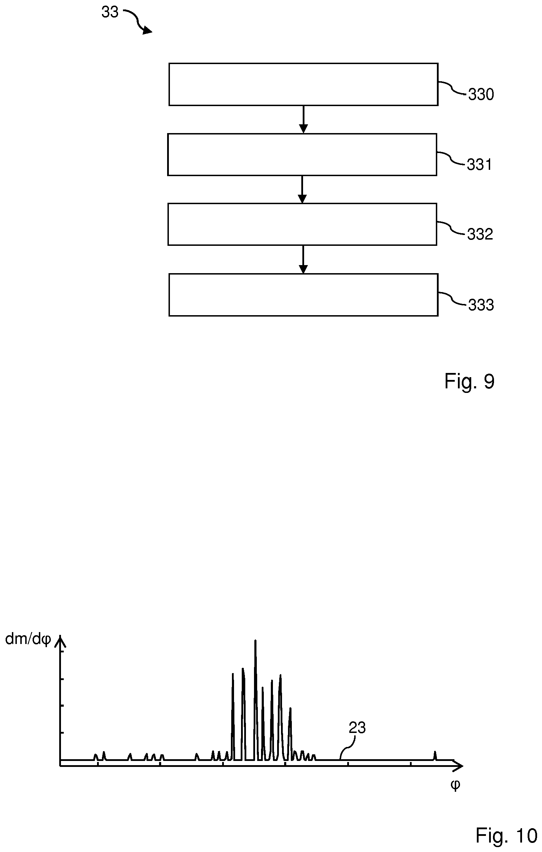

Bei 33 wird auf Grundlage der ermittelten Gemischbildungs-Teilverläufe ein Brennverlauf 24' bestimmt. Das Verfahren wird nachfolgend mit Bezug auf Fig. 9 beschrieben.

Bei 330 werden die ermittelten Gemischbildungs-Teilverläufe zu einem Gemischbildungs-Verlauf 23 als Wirkgrößen-Verlauf der Aufbereitung 12 des Kraftstoffs überlagert. Der Gemischbildungs-Verlauf 23 ist in Fig. 10 dargestellt.

Bei 331 wird der Gemischbildungs-Verlauf 23 als Eingangsgrößen-Verlauf der Energieumsetzung 13 genutzt. Auf Grundlage des Gemischbildungs-Verlaufs werden für jeden der neu bestimmten Gemischbildungs-Teilverläufe charakteristische Größen bestimmt. Dazu wird ein Integral des Gemischbildungs-Verlaufs 23 gebildet. Im integralen Verlauf werden die Winkellagen anhand prozentual definierter Höhenschwellen identifiziert.

Bei 332 wird zu jeder für je einen Gemischbildungs-Teilverlauf charakteristischen Größe jeweils ein Teilbrennverlauf 24'tₓ, 24't... an den entsprechenden Kurbelwellenwinkeln ermittelt. Als Ermittlungsvorschrift wird hier eine Vibefunktion zugrunde gelegt.

Bei 333 werden die ermittelten Teilbrennverläufe 24'tₓ überlagert, um einen Brennverlauf 24' zu bestimmen.

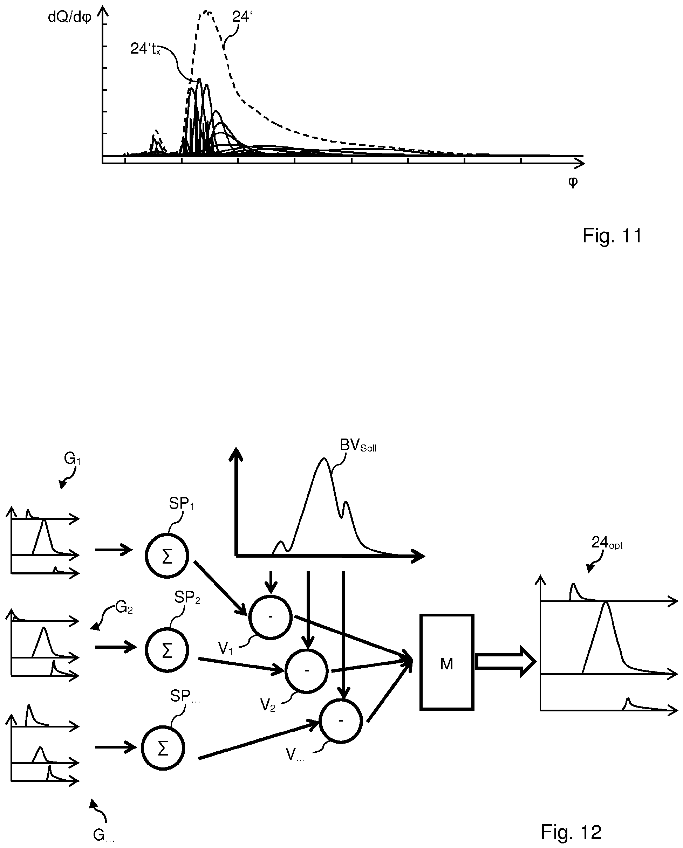

In Fig. 12 wird ein Verfahren zum Bestimmen von optimalen Einspritzparametern gezeigt. Dabei wird für ein erstes Einspritzparameterset eine erste Gruppe G₁ von Teilbrennverläufen gebildet, wie es oben beschrieben wurde. Bei SP₁ werden die Teilverläufe der ersten Gruppe G₁ überlagert, um einen ersten Test-Brennverlauf zu bestimmen. Für weitere Einspritzparametersets werden weitere Gruppen G₂, G... von Teilbrennverläufen gebildet. Die Teilverläufe jeder weiteren Gruppe G₂, G... werden bei SP₂, SP... zu je einem weiteren Test-Brennverlauf überlagert.

Bei V₁ wird der erste Test-Brennverlauf mit einem Soll-Brennverlauf BVₛₒₗₗ verglichen. Entsprechend werden bei V₂, V... die weiteren Test-Brennverläufe mit dem Soll-Brennverlauf BV_{Soll} verglichen. Auf Grundlage der Vergleichsergebnisse aus V₁, V₂, V... wird bei M ermittelt, welcher Test-Brennverlauf die beste Übereinstimmung mit dem Soll-Brennverlauf BV_{Soll} liefert und als optimaler Brennverlauf 24ₒₚₜ ausgegeben. Das zugrundeliegende Einspritzparameterset wird dann zur Steuerung der Verbrennungskraftmaschine zur Verfügung gestellt.

### Bezugszeichenliste

- 1: motorische Wirkkette
- 10: Nadelhub
- 11: Einspritzung
- 12: Aufbereitung
- 13: Energieumsetzung
- 14: Energietransport
- 20: Bestromungsverlauf
- 21: Nadelhubverlauf
- 22, 22': Einspritzverlauf
- 23: Gemischbildungsverlauf
- 24, 24': Brennverlauf
- 24t₀, 24t₁, 24t..., 24'tₓ: Teilbrennverläufe
- 24ₒₚₜ: optimaler Brennverlauf
- 25: Heizverlauf
- 3: Verfahren zum Bestimmen eines Brennverlaufs
- 30: Erhalten eines Einspritzverlaufs
- 31: Bestimmen von für je einen Einspritz-Teilverlauf charakteristischen Größen
- 32: Ermitteln jeweils eines Teilbrennverlaufs oder eines Gemischbildungs-Teilverlaufs
- 33: Bestimmen des Brennverlaufs
- 330: Bestimmen eines Gemischbildungsverlaufs
- 331: Bestimmen von für je einen Gemischbildungs-Teilverlauf charakteristischen Größen
- 332: Ermitteln jeweils eines Teilbrennverlaufs
- 333: Bestimmen des Brennverlaufs
- 4: Steuervorrichtung
- 40, 42, 43, 44: Signaleingang
- 41: Prozessor
- 410: Paketplaner
- 411: Verlaufsgenerator
- 45: Signalausgang
- 5: Parameter
- 6: Umgebungsbedingungen
- VE, VE1, VE2: Voreinspritzung
- HE: Haupteinspritzung
- NE: Nacheinspritzung
- i: Stromstärke
- Q: Wärmemenge
- ϕ: Kurbelwellenwinkel
- Int22: Einspritzverlaufsintegral
- ΔIntₘₐₓ: Maximalhub des Einspritzverlaufsintegrals
- ϕ₀, ϕ₁, ϕ₂, ϕ...: Kurbelwellenwinkel
- ϕₐ, ϕ_{b}: Grenzkurbelwellenwinkel
- q₀, q₁, q...: Funktionswerte auf dem Einspritzverlaufsintegral
- Δq₀, Δq₁, Δq₂, q...,: charakteristische Größen der Einspritz-Teilverläufe
- G₁, G₂, G...: Gruppen von Teilbrennverläufen
- SP₁, SP₂, SP...: Überlagern von Teilbrennverläufen
- V₁, V₂, V...: Vergleichen von Brennverlaufs-Testverläufen mit einem Soll-Brennverlauf
- BV_{Soll}: Soll-Brennverlauf
- M: Bestimmen eines Brennverlaufs-Testverlaufs mit minimalem Unterschied zum Soll-Brennverlauf
- m: eingespritzte Kraftstoffmenge
- dm/dϕ: eingespritzter Kraftstoffmassenstrom
- dQ/dϕ: Wärmemengenstrom

## Patentansprüche

1. Verfahren zum Ermitteln eines Wirkgrößen-Verlaufs einer physikalischen Wirkgröße eines ersten Wirkmechanismus (10-14) einer motorischen Wirkkette (1) einer Verbrennungskraftmaschine, umfassend:
Erhalten (30) eines Eingangsgrößen-Verlaufs einer physikalischen Eingangsgröße des ersten Wirkmechanismus (10-14) oder eines diesem vorangehenden zweiten Wirkmechanismus der motorischen Wirkkette (1) der Verbrennungskraftmaschine;
Bestimmen (31) von für je einen Eingangsgrößen-Teilverlauf des Eingangsgrößen-Verlaufs charakteristischen Größen auf Grundlage des Eingangsgrößen-Verlaufs;
Ermitteln (32) jeweils eines Wirkgrößen-Teilverlaufs zu jeder der für je einen der Eingangsgrößen-Teilverläufe charakteristischen Größen mit Hilfe einer Ermittlungsvorschrift; und
Bestimmen (33) des Wirkgrößen-Verlaufs des ersten Wirkmechanismus auf Grundlage der ermittelten Wirkgrößen-Teilverläufe,
wobei das Bestimmen (31) von für je einen Eingangsgrößen-Teilverlauf des Eingangsgrößen-Verlaufs charakteristischen Größen umfasst:
Bilden eines Eingangsgrößen-Verlaufsintegrals des Eingangsgrößen-Verlaufs;
Zerlegen des Eingangsgrößen-Verlaufsintegrals in Intervalle; und
Bilden der für je einen Eingangsgrößen-Teilverlauf des Eingangsgrößen-Verlaufs charakteristischen Größen auf Grundlage der Intervalle, wobei jedes Intervall einem der Eingangsgrößen-Teilverläufe zugeordnet ist,
wobei ein Wirkgrößen-Teilverlauf der physikalischen Wirkgröße zu einer für einen ersten Eingangsgrößen-Teilverlauf charakteristischen Größe mit Hilfe einer ersten Ermittlungsvorschrift und ein Wirkgrößen-Teilverlauf derselben physikalischen Wirkgröße zu einer für einen zweiten Eingangsgrößen-Teilverlauf charakteristischen Größe mit Hilfe einer zweiten Ermittlungsvorschrift, die sich von der ersten Ermittlungsvorschrift unterscheidet, ermittelt wird.

2. Verfahren nach Anspruch 1, wobei
der Eingangsgrößen-Verlauf ein Ansteuerverlauf (20), ein Nadelhubverlauf (21), ein Einspritzverlauf (22), ein Gemischbildungsverlauf (23) oder ein Brennverlauf (24) ist, und/oder wobei
der Wirkgrößen-Verlauf ein Nadelhubverlauf (21), ein Einspritzverlauf (22), ein Gemischbildungsverlauf (23), ein Brennverlauf (24) oder ein Heizverlauf (25) ist.

3. Verfahren nach Anspruch 1 oder 2, wobei die Ermittlungsvorschrift eine empirische oder physikalische Ermittlungsvorschrift ist oder enthält, insbesondere eine Formfunktion und/oder ein physikalisches Modell.

4. Verfahren nach einem der Ansprüche 1 bis 3, wobei
das Ermitteln (32) jedes Wirkgrößen-Teilverlaufs das Ermitteln eines Wirkgrößen-Teilverlaufs des ersten Wirkmechanismus (10-14) zu jeder für je einen der Eingangsgrößen-Teilverläufe des Eingangsgrößen-Verlaufs des ersten oder zweiten Wirkmechanismus (10-14) charakteristischen Größe mit Hilfe der Ermittlungsvorschrift umfasst, und wobei
das Bestimmen (33) des Wirkgrößen-Verlaufs des ersten Wirkmechanismus das Überlagern der Wirkgrößen-Teilverläufe des ersten Wirkmechanismus (10-14) zu dem Wirkgrößen-Verlauf des ersten Wirkmechanismus (10-14) umfasst.

5. Verfahren nach einem der Ansprüche 1 bis 3, wobei
das Ermitteln (32) jedes Wirkgrößen-Teilverlaufs das Ermitteln eines Wirkgrößen-Teilverlaufs des zweiten Wirkmechanismus zu jeder für je eine der Eingangsgrößen-Teilverläufe des Eingangsgrößen-Verlaufs des zweiten Wirkmechanismus charakteristischen Größe mit Hilfe der Ermittlungsvorschrift umfasst, und wobei
das Bestimmen (33) des Wirkgrößen-Verlaufs des ersten Wirkmechanismus umfasst:
Ermitteln eines Wirkgrößen-Teilverlaufs des ersten Wirkmechanismus zu jeder für je einen der Wirkgrößen-Teilverläufe des zweiten Wirkmechanismus charakteristischen Größe mit Hilfe einer weiteren Ermittlungsvorschrift; und
Überlagern der Wirkgrößen-Teilverläufe des ersten Wirkmechanismus zu dem Wirkgrößen-Verlauf des ersten Wirkmechanismus.

6. Verfahren nach einem der Ansprüche 1 bis 3, wobei
das Ermitteln (32) jedes Wirkgrößen-Teilverlaufs das Ermitteln eines Wirkgrößen-Teilverlaufs des zweiten Wirkmechanismus zu jeder für je einen der Eingangsgrößen-Teilverläufe des Eingangsgrößen-Verlaufs des zweiten Wirkmechanismus charakteristischen Größe mit Hilfe der Ermittlungsvorschrift umfasst, und wobei
das Bestimmen (33) des Wirkgrößen-Verlaufs des ersten Wirkmechanismus (10-14) umfasst:
Bestimmen (330) eines Wirkgrößen-Verlaufs des zweiten Wirkmechanismus auf Grundlage der Wirkgrößen-Teilverläufe des zweiten Wirkmechanismus als Eingangsgrößen-Verlauf des ersten Wirkmechanismus;
Bestimmen (331) von für je einen Eingangsgrößen-Teilverlauf des Eingangsgrößen-Verlaufs des ersten Wirkmechanismus charakteristischen Größen des ersten Wirkmechanismus auf Grundlage des Wirkgrößen-Verlaufs des zweiten Wirkmechanismus;
Ermitteln (332) eines Wirkgrößen-Teilverlaufs des ersten Wirkmechanismus (10-14) zu jeder für je einen der Eingangsgrößen-Teilverläufe des ersten Wirkmechanismus (10-14) charakteristischen Größe mit Hilfe einer weiteren Ermittlungsvorschrift; und
Überlagern (333) der Wirkgrößen-Teilverläufe des ersten Wirkmechanismus (10-14) zu dem Wirkgrößen-Verlaufs des ersten Wirkmechanismus (10-14).

7. Verfahren nach einem der Ansprüche 1 bis 6, wobei
das Erhalten (30) des Eingangsgrößen-Verlaufs das Erhalten unterschiedlicher Eingangsgrößen-Verläufe der physikalischen Eingangsgröße des ersten oder zweiten Wirkmechanismus umfasst;
das Bestimmen (31) von für je einen Eingangsgrößen-Teilverlauf des Eingangsgrößen-Verlaufs charakteristischen Größen auf Grundlage des Eingangsgrößen-Verlaufs das Bestimmen von für je einen Eingangsgrößen-Teilverlauf des Eingangsgrößen-Verlaufs charakteristischen Größen auf Grundlage jedes Eingangsgrößen-Verlaufs umfasst;
das Ermitteln (32) des Wirkgrößen-Teilverlaufs das Ermitteln eines Wirkgrößen-Teilverlaufs zu jeder für einen der Eingangsgrößen-Teilverläufe charakteristischen Größe für jeden der unterschiedlichen Eingangsgrößen-Verläufe mit Hilfe einer oder mehrerer Ermittlungsvorschriften umfasst; und
das Bestimmen (33) des Wirkgrößen-Verlaufs umfasst:
Bestimmen (SP₁, SP₂, SP...) eines Test-Wirkgrößen-Verlaufs für jeden der unterschiedlichen Eingangsgrößen-Verläufe;
Vergleichen (V₁, V₂, V...) der bestimmten Test-Wirkgrößen-Verläufe mit einem Wirkgrößen-Sollverlauf (BV_{Soll}) der Verbrennungskraftmaschine; und
Auswählen (M) des Test-Wirkgrößen-Verlaufs mit der besten Übereinstimmung mit dem Wirkgrößen-Sollverlauf (BV_{Soll}) der Verbrennungskraftmaschine als Wirkgrößen-Verlauf (24ₒₚₜ).

8. Steuervorrichtung (4) zum Ermitteln eines Wirkgrößen-Verlaufs einer physikalischen Wirkgröße eines ersten Wirkmechanismus (10-14) einer motorischen Wirkkette (1) einer Verbrennungskraftmaschine, die dazu ausgebildet ist, ein Verfahren (3) nach einem der Ansprüche 1 bis 7 durchzuführen.

## Claims

1. Method for establishing an effective variable curve of a physical effective variable of a first effective mechanism (10-14) of a motor-related active chain (1) of an internal combustion engine, comprising:
obtaining (30) an input variable curve of a physical input variable of the first effective mechanism (10-14) or of a second effective mechanism, preceding the latter, of the motor-related active chain (1) of the internal combustion engine;
determining (31) variables that are characteristic for respectively one input variable partial curve of the input variable curve on the basis of the input variable curve;
establishing (32) respectively one effective variable partial curve for each variable that is characteristic for respectively one of the input variable partial curves with the aid of an establishment specification; and
determining (33) the effective variable curve of the first effective mechanism on the basis of the established effective variable partial curves,
wherein determining (31) variables that are characteristic for respectively one input variable partial curve of the input variable curve comprises:
forming an input variable curve integral of the input variable curve;
decomposing the input variable curve integral into intervals; and
forming the variables that are characteristic for respectively one input variable partial curve of the input variable curve on the basis of the intervals, wherein each interval is assigned to one of the input variable partial curves,
wherein an effective variable partial curve of the physical effective variable for a variable that is characteristic for a first input variable partial curve is established with the aid of a first establishment specification and an effective variable partial curve of the same physical effective variable for a variable that is characteristic for a second input variable partial curve is established with the aid of a second establishment specification, which differs from the first establishment specification.

2. Method according to Claim 1, wherein
the input variable curve is an actuation curve (20), a needle travel curve (21), an injection curve (22), a mixture preparation curve (23) or a combustion curve (24), and/or wherein
the effective variable curve is a needle travel curve (21), an injection curve (22), a mixture preparation curve (23), a combustion curve (24) or a heating curve (25).

3. Method according to Claim 1 or 2, wherein the establishment specification is or contains an empirical or physical establishment specification, in particular a form function and/or a physical model.

4. Method according to any one of Claims 1 to 3, wherein
establishing (32) each effective variable partial curve comprises establishing an effective variable partial curve of the first effective mechanism (10-14) for each variable that is characteristic for respectively one of the input variable partial curves of the input variable curve of the first or second effective mechanism (10-14) with the aid of the establishment specification, and wherein
determining (33) the effective variable curve of the first effective mechanism comprises superimposing the effective variable partial curves of the first effective mechanism (10-14) on the effective variable curve of the first effective mechanism (10-14).

5. Method according to any one of claims 1 to 3, wherein
establishing (32) each effective variable partial curve comprises establishing an effective variable partial curve of the second effective mechanism for each variable that is characteristic for respectively one of the input variable partial curves of the input variable curve of the second effective mechanism with the aid of the establishment specification, and wherein
determining (33) the effective variable curve of the first effective mechanism comprises:
establishing an effective variable partial curve of the first effective mechanism for each variable that is characteristic for respectively one of the effective variable partial curves of the second effective mechanism with the aid of a further establishment specification; and
superimposing the effective variable partial curves of the first effective mechanism on the effective variable curve of the first effective mechanism.

6. Method according to any one of Claims 1 to 3, wherein
establishing (32) each effective variable partial curve comprises establishing an effective variable partial curve of the second effective mechanism for each variable that is characteristic for respectively one of the input variable partial curves of the input variable curve of the second effective mechanism with the aid of the establishment specification, and wherein
determining (33) the effective variable curve of the first effective mechanism (10-14) comprises:
determining (330) an effective variable curve of the second effective mechanism on the basis of the effective variable partial curves of the second effective mechanism as an input variable curve of the first effective mechanism;
determining (331) variables of the first effective mechanism that are characteristic for respectively one input variable partial curve of the input variable curve of the first effective mechanism on the basis of the effective variable curve of the second effective mechanism;
establishing (332) an effective variable partial curve of the first effective mechanism (10-14) for each variable that is characteristic for respectively one of the input variable partial curves of the first effective mechanism (10-14) with the aid of a further establishment specification; and
superimposing (333) the effective variable partial curves of the first effective mechanism (10-14) to form the effective variable curve of the first effective mechanism (10-14).

7. Method according to any one of Claims 1 to 6, wherein
obtaining (30) the input variable curve comprises obtaining different input variable curves of the physical input variable of the first or second effective mechanism;
determining (31) variables that are characteristic for respectively one input variable partial curve of the input variable curve on the basis of the input variable curve comprises determining variables that are characteristic for respectively one input variable partial curve of the input variable curve on the basis of each input variable curve;
establishing (32) the effective variable partial curve comprises establishing an effective variable partial curve for each variable that is characteristic for one of the input variable partial curves for each of the different input variable curves with the aid of one or more establishment specifications; and
determining (33) the effective variable curve comprises:
determining (SP₁, SP₂, SP...) a test effective variable curve for each of the different input variable curves;
comparing (V₁, V₂, V...) the determined test effective variable curves to an effective variable setpoint curve (BV_{Soll}) of the internal combustion engine; and
selecting (M) the test effective variable curve with the best correspondence with the effective variable setpoint curve (BV_{Soll}) of the internal combustion engine as effective variable curve (24ₒₚₜ).

8. Control apparatus (4) for establishing an effective variable curve of a physical effective variable of a first effective mechanism (10-14) of a motor-related active chain (1) of an internal combustion engine, embodied to carry out a method (3) according to any one of Claims 1 to 7.

## Revendications

1. Procédé de détermination de l'évolution d'une grandeur physique d'action d'un mécanisme d'action (10-14) d'une chaîne d'action (1) motorisée d'un moteur à combustion interne, le procédé comportant les étapes qui consistent à :
obtenir (30) une évolution d'une grandeur d'entrée physique du premier mécanisme d'action (10-14) ou d'un deuxième mécanisme d'action de la chaîne d'action (1) motorisée du moteur à combustion interne qui précède ce premier mécanisme d'action,
sur la base de l'évolution des grandeurs d'entrée, déterminer (31) des grandeurs caractéristiques de chacune des parties de l'évolution des grandeurs d'entrée,
à l'aide d'une prescription de détermination, déterminer (32) une partie de l'évolution des grandeurs d'action pour chacune des grandeurs caractéristiques des parties d'évolution des grandeurs d'entrée et
sur la base des parties ainsi déterminées de l'évolution des grandeurs d'action, déterminer (33) l'évolution des grandeurs d'action du premier mécanisme d'action,
la détermination (31) comprenant pour chacune des grandeurs caractéristiques de chaque partie d'évolution des grandeurs d'entrée :
la formation d'une intégrale de l'évolution de la grandeur d'entrée,
la décomposition de l'intégrale d'évolution des grandeurs d'entrée en intervalles
sur la base des intervalles, la formation de la grandeur caractéristique de chaque partie de l'évolution des grandeurs d'entrée, chaque intervalle étant associé à l'une des parties de l'évolution des grandeurs d'entrée,
une partie de l'évolution de la grandeur d'action physique pour une grandeur caractéristique d'une première partie de l'évolution des grandeurs d'entrée étant déterminée à l'aide d'une première prescription de détermination et une partie de l'évolution de la même grandeur d'action physique pour une grandeur caractéristique d'une deuxième partie de l'évolution des grandeurs d'entrée étant déterminée au moyen d'une deuxième prescription de détermination différente de la première prescription de détermination.

2. Procédé selon la revendication 1, dans lequel l'évolution des grandeurs d'entrée est l'évolution de commande (20), l'évolution (21) de la course d'un pointeau, l'évolution (22) de l'injection, l'évolution (23) de formation de mélange ou l'évolution de combustion (24) et/ou l'évolution de la grandeur d'action est l'évolution (21) de la course d'un pointeau, l'évolution (22) d'une injection, l'évolution (23) de la formation d'un mélange, l'évolution (24) de la combustion ou l'évolution (25) du chauffage.

3. Procédé selon les revendications 1 ou 2, dans lequel la prescription de détermination est ou contient une prescription de détermination empirique ou physique, en particulier une fonction de forme et/ou un modèle physique.

4. Procédé selon l'une des revendications 1 à 3, dans lequel la détermination (32) de chaque partie d'évolution d'une grandeur d'action comporte la détermination d'une partie de l'évolution de la grandeur d'action du premier mécanisme d'action (10-14) pour chaque grandeur caractéristique de chacune des parties d'évolution des grandeurs d'entrée du premier ou du deuxième mécanisme d'action (10-14) à l'aide de la prescription de détermination et
la détermination (33) de l'évolution de la grandeur d'entrée du premier mécanisme d'action comporte la superposition des parties d'évolution des grandeurs d'entrée du premier mécanisme d'action (10-14) sur l'évolution des grandeurs d'action du premier mécanisme d'action (10-14).

5. Procédé selon l'une des revendications 1 à 3, dans lequel la détermination (32) de chaque partie d'évolution d'une grandeur d'action comporte la détermination, à l'aide de la prescription de détermination, d'une partie de l'évolution d'une grandeur d'action du deuxième mécanisme d'action pour chaque grandeur caractéristique de chacune des parties d'évolution des grandeurs d'entrée du deuxième mécanisme d'action et
la détermination (33) de l'évolution de la grandeur d'entrée du premier mécanisme d'action comporte
la détermination d'une partie de l'évolution des grandeurs d'action du premier mécanisme d'action pour chaque grandeur caractéristique de chacune des parties d'évolution des grandeurs d'action du deuxième mécanisme d'action à l'aide d'une autre prescription de détermination et
la superposition des parties d'évolution des grandeurs d'entrée du premier mécanisme d'action sur l'évolution des grandeurs d'action du premier mécanisme d'action.

6. Procédé selon l'une des revendications 1 à 3, dans lequel la détermination (32) de chaque partie d'évolution d'une grandeur d'action comporte la détermination, à l'aide de la prescription de détermination, d'une partie de l'évolution d'une grandeur d'action du deuxième mécanisme d'action pour chaque grandeur caractéristique de chacune des parties d'évolution des grandeurs d'entrée du deuxième mécanisme d'action et
la détermination (33) de l'évolution de la grandeur d'action du premier mécanisme d'action (10-14) comporte
la détermination (330) de l'évolution d'une grandeur d'action du deuxième mécanisme d'action sur la base des parties d'évolution des grandeurs d'action du deuxième mécanisme d'action en tant qu'évolution des grandeurs d'entrée du premier mécanisme d'action,
la détermination (331) de grandeurs du premier mécanisme d'action caractéristiques de chaque partie d'évolution des grandeurs d'entrée du premier mécanisme d'action sur la base de l'évolution des grandeurs d'action du deuxième mécanisme d'action,
la détermination (332) d'une partie d'évolution des grandeurs d'action du premier mécanisme d'action (10-14) pour chaque grandeur caractéristique de chacune des parties d'évolution des grandeurs d'entrée du premier mécanisme d'action (10-14) à l'aide d'une autre prescription de détermination et
la superposition (333) des parties d'évolution des grandeurs d'entrée du premier mécanisme d'action (10-14) à l'évolution des grandeurs d'entrée du premier mécanisme d'action (10-14).

7. Procédé selon l'une des revendications 1 à 6, dans lequel l'obtention (30) de l'évolution des grandeurs d'entrée comporte l'obtention de différentes évolutions de grandeurs d'entrée physique du premier ou du deuxième mécanisme d'action,
la détermination (31) de grandeurs caractéristiques de chaque partie d'évolution des grandeurs d'entrée sur la base de l'évolution des grandeurs d'entrée comporte la détermination de grandeurs caractéristiques de chaque partie d'évolution des grandeurs d'entrée sur la base de chaque évolution des grandeurs d'entrée,
la détermination (32) de la partie d'évolution des grandeurs d'action comporte la détermination d'une partie d'évolution de grandeurs d'action pour chaque grandeur caractéristique des parties de l'évolution des grandeurs d'entrée pour chacune des différentes évolutions de grandeur d'entrée, à l'aide d'une ou plusieurs prescriptions de détermination et
la détermination (33) de l'évolution des grandeurs d'action comporte :
la détermination (SP₁, SP₂, SP...) d'une évolution test de grandeurs d'action pour chacune des différentes évolutions de grandeurs d'action,
la comparaison (V₁, V₂, V...) des évolutions de test des grandeurs d'action ainsi déterminées à une évolution de consigne (BV_{Soll}) des grandeurs d'action du moteur à combustion interne et
la sélection (M) de l'évolution de test des grandeurs d'action avec le meilleure correspondance avec l'évolution de consigne (BV_{Soll}) des grandeurs d'action du moteur à combustion interne, en tant qu'évolution (24ₒₚₜ) de grandeur d'action.

8. Ensemble de commande (4) destiné à déterminer l'évolution d'une grandeur d'action physique d'un premier mécanisme d'action (10-14) d'une chaîne d'action motorisée (1) d'un moteur à combustion interne, configuré pour mettre en oeuvre un procédé (3) selon l'une des revendications 1 à 7.
